# EUROPÄISCHE PATENTSCHRIFT

(11) **EP 2 039 436 B1**
(45) Veröffentlichungstag und Bekanntmachung des Hinweises auf die Patenterteilung: **21.07.2010**
(21) Anmeldenummer: 08014742.4
(22) Anmeldetag: 20.08.2008
(51) Int. Cl.: B05B 15/12, B03C 3/017

(54) **Vorrichtung zum Beschichten von Gegenständen**
Device for coating objects
Dispositif de revêtement d'objets

(30) Priorität: 19.09.2007 DE 102007044784
(43) Veröffentlichungstag der Anmeldung: 25.03.2009
(73) Patentinhaber: EISENMANN Anlagenbau GmbH & Co. KG, 71032 Böblingen (DE)
(72) Erfinder: Katefidis, Apostolos, 71116 Gärtringen (DE)
(74) Vertreter: Ostertag, Ulrich

(56) Entgegenhaltungen:
- EP-A- 0 830 887
- WO-A-2008/017345
- CH-A5- 617 871
- DE-A1- 2 723 988
- DE-A1- 3 201 553
- DE-A1- 4 017 844
- US-A- 4 684 378

## Beschreibung

Die Erfindung betrifft eine Vorrichtung zum Beschichten nach dem Oberbegriff des Patentanspruchs 1.

Beim Lackieren, insbesondere beim Spritzlackieren, wird ein Luftstrom erzeugt, welcher einen Lackierbereich im Wesentlichen von oben nach unten durchströmt und überschüssigen Lack aus dem Lackierbereich abführt. Die Lackpartikel sollen außerhalb des Lackierbereichs wieder von dem Luftstrom, der dem Lackiersystem wieder zugeführt wird, getrennt werden. Beim trockenen Abscheiden wird hierbei auf die Verwendung von Flüssigkeiten, wie dies beispielsweise bei bekannten Luftwäschern der Fall ist, verzichtet, so dass auf eine spätere, aufwendige Konditionierung, insbesondere Trocknung, des Luftstroms und auf eine Aufbereitung des bisher zur Abscheidung benutzten Wassers verzichtet werden kann.

Aus der DE 103 41 977 A1 ist eine Vorrichtung ähnlich derjenigen der eingangs genannten Art bekannt, bei der eine Abtrennstufe mindestens ein Sieb umfasst, das Durchtrittsöffnungen für den Luftstrom aufweist. Das Sieb hat eine elektrisch leitfähige Oberfläche. Durch die elektrische Leitfähigkeit ergibt sich eine elektrostatische Wechselwirkung zwischen dem Sieb einerseits und den im dem Luftstrom enthaltenen elektrisch geladenen Overspray-Partikeln andererseits. Die elektrisch geladenen Overspray-Partikel werden in Folge der Wechselwirkung zu den zwischen den Durchtrittsöffnungen für den Luftstrom liegenden Bereichen des Siebes hin abgelenkt und bleiben dort haften. Zum Regenerieren des Siebes werden die Overspray-Partikel von dem Sieb abgeblasen und/oder abgebürstet. Ladungsfreie Overspray-Partikel werden mit einem solchen Sieb allerdings nur vom Luftstrom abgetrennt, wenn sie unmittelbar auf die zwischen den Durchtrittsöffnungen für den Luftstrom liegenden Bereiche zu fliegen. Dies ist allerdings sehr unwahrscheinlich, da die Durchtrittsöffnungen verhältnismäßig groß sind und geradlinig in Strömungsrichtung angeordnet sind, um eine große Strömungsgeschwindigkeit zu ermöglichen. Außerdem ist die Herstellung eines solchen Siebes aufwendig.

Eine Vorrichtung der eingangs genannten Art ist aus der CH 617 871 A5 bekannt geworden. Dort werden Gegenstände in einer Kabine elektrostatisch mit Pulver beschichtet. Im unteren Bereich der Kabine befindet sich das Obertrum eines endlosen umlaufenden Filterbandes, unterhalb welchem Luft abgesaugt wird. Overspray sammelt sich so auf dem Obertrum. Zur Einstellung der Luftströmung in der Kabine und zur Erhöhung der Filterleistung des Filterbandes ist vorgesehen, eine Grundschicht des aufzutragenden Pulvers mittels einer Ablagerungseinrichtung auf das Filterband aufzutragen, ehe dieses in die Kabine eintritt. Diese Grundschicht erhöht die Filterleistung im Vergleich zu den Verhältnissen bei der oben genannten DE 103 41 977 A1, jedoch steigt auch der Druckverlust, was nachteilig ist. Die Gesamtheit der Pulverteilchen wird hinter der Kabine vom Filterband abgeblasen, gesammelt und einer Wiederverwendung zugeführt.

Bei anderen bekannten Vorrichtungen werden die mit dem Luftstrom mitgeführten Lackpartikel mittels Beutelfiltern oder Taschenfiltern abgetrennt. Die hierbei verwendeten Abtrennstufen bewirken jedoch hohe Druckverluste und/oder es wird kein ausreichender Abscheidungsgrad an Lackpartikeln erzielt. Darüber hinaus können diese Abtrennstufen nicht regeneriert werden, ohne vorher die Vorrichtung stillzusetzen.

Bekannt ist auch die Abscheidung von Overspray in einem Bett von Mikrokugeln, wie das in der EP 0 830 887 A1 beschrieben ist. Dieses Bett wird von Zeit zu Zeit erneuert; die Mikrokugeln werden mechanisch vom anhaftenden Overspray gereinigt. Mit wachsender Beladung der Mikrokugeln wächst auch der Druckverlust längs des Bettes.

Auch bei der Holzverarbeitung ist Abscheidung von Bedeutung. So beschreibt die DE 40 17 844 A1 eine Vorrichtung, bei welcher in einem Zyklon die mit Staub und Spänen beladene Abluft von gröberen Bestandteilen gereinigt wird, welche befeuchtet, gepresst und anschließend wieder zerhackt werden, um als Filterschicht auf ein gitterartiges Förderband geschüttet zu werden. Die noch Staub enthaltende Abluft wird von unten gegen das Förderband mit der aufliegenden Filterschicht geblasen, wobei der Staub in der feuchten Filterschicht hängen bleibt. Die so mit Staub beladene Filterschicht wird anschließend gepresst, getrocknet und im Stapel abgelegt.

Aufgabe der vorliegenden Erfindung ist es, eine Vorrichtung der eingangs genannten Art so zu gestalten, dass technisch einfach und effizient Partikel unabhängig von ihrer elektrischen Ladung aus dem Luftstrom abgetrennt werden können.

Diese Aufgabe wird erfindungsgemäß durch eine Vorrichtung mit den Merkmalen des Patentanspruchs 1 gelöst.

Die Abtrenneinheit weist also, wie im Stand der Technik bekannt, eine Schüttung aus Abscheidekörpern auf, deren mäandernden Zwischenräume die Durchtrittsöffnungen bilden.

Erfindungsgemäß sind die Abscheidekörper profiliert, wodurch sie dreidimensionale Gestalt haben und in der Schüttung besonders große Durchtrittsöffnungen aufweisen. Aufgrund der unzähligen Umlenkungen, welche die Durchtrittsöffnungen besitzen, können die Partikel die Abtrenneinheit nicht auf geradem Wege durchqueren und bleiben so mit großer Wahrscheinlichkeit an den Abscheidekörpern hängen. Die Aufnahmekapazität der Abtrenneinheit an Partikeln pro Zeiteinheit ist insbesondere abhängig von der Dicke der Lage in Luftströmungsrichtung, insbesondere der Schüttungshöhe. Insbesondere nasse und/oder klebrige Partikel, welche besonders gut an den Abscheidekörpern haften, können auf diese Weise mit nur einer Abtrennstufe effizient von dem Luftstrom getrennt werden.

Mit der Zufuhreinrichtung, welche erfindungsgemäß eine Zerkleinerungseinrichtung umfasst, können die Abscheidekörper vor Ort bedarfsgerecht aus kompakten Grundkörpern, nämlich einer aufgerollten Bahn oder einem plattenförmigen Grundkörper gewonnen und der Abtrenneinheit zugeführt werden. Die Grundkörper haben ein geringeres Volumen als die späteren Lagen von Abscheidekörpern, die mit den die Durchtrittsöffnungen durchzogen sind, und können daher platzsparend transportiert und gelagert werden. Aufgerollte Bänder können einfach in unterschiedlichen Größen realisiert und nach Bedarf abgerollt werden.

Vorteilhafterweise kann die Vorrichtung zum Beschichten von Fahrzeugkarosserien beziehungsweise zum Lackieren von Gegenständen eingesetzt werden.

Die Einrichtung zum Abscheiden von haftfähigen Partikeln ist insbesondere zum Abscheiden von Lack-Overspray geeignet.

Mit einem Rotations-Stanzwerkzeug können aus dem Grundkörper einfach im Durchlaufverfahren die Abscheidekörper geschnitten oder gestanzt werden.

Bei einer vorteilhaften Ausführungsform können die Abscheidekörper aus Metall, insbesondere Aluminium, sein. Metallische Abscheidekörper können nach der Benutzung einfach aufbereitet und wiederverwendet werden. Beispielsweise können Abscheidekörper aus Metall einfach gewalzt oder eingeschmolzen und wieder zu Abscheidekörper verarbeitet werden, Mit metallischen Abscheidekörpern können außerdem geladene Partikel elektrostatisch wechselwirken und so eine zusätzliche Anziehungskraft erfahren.

Aluminium ist darüber hinaus im Gegensatz beispielsweise zu Eisen sehr leicht, widerstandsfähig gegenüber Sauerstoff, Feuchtigkeit und Säuren, und sehr korrosionsbeständig. Außerdem ist Aluminium im Vergleich zu Eisen verhältnismäßig weich und kann mechanisch einfach bearbeitet werden. So kann Aluminium einfach in dünne Bahnen gewalzt werden, die verhältnismäßig reißfest und flexibel sind. Aluminiumbahnen oder Platten können einfach geschnitten, gestanzt, strukturiert oder perforiert werden.

Bei einer weiteren vorteilhaften Ausführungsform kann eine Transporteinrichtung, insbesondere ein umlaufendes Endlos-Fördermittel, vorgesehen sein, die geeignet ist, die Abscheidekörper in den Bereich des Luftstroms hinein und aus dem Bereich des Luftstroms heraus zu fördern. Auf diese Weise können die mit Partikeln beladenen Abscheidekörper einfach gegen frische Abscheidekörper ausgetauscht werden.

Bevorzugt kann die Transporteinrichtung geeignet sein, die Abscheidekörper im Wesentlichen senkrecht zum Luftstrom intermittierend oder kontinuierlich zu fördern. Dies ermöglicht einen schnellen kontinuierlichen Austausch der im Luftstrom befindlichen, mit Partikeln beladenen Abscheidekörper gegen frisch regenerierte und/oder neue Abscheidekörper. Dies gewährleistet immer eine optimale Aufnahmefähigkeit für die Partikel und eine effiziente Abtrennung derselben vom Luftstrom.

Zweckmäßigerweise kann die Transporteinrichtung ein umlaufendes luftdurchlässiges Endlos-Förderband aufweisen, das geeignet ist, die Abscheidekörper lose als Schüttgut oder in insbesondere luftdurchlässigen Behältern zu befördern. Die Abscheidekörper können einfach kontinuierlich oder getaktet auf den Anfang eines oberen Trums des Förderbandes geschüttet werden, so dass sich wenigstens eine Lage auf dem Förderband ausbildet. Am Ende des oberen Trums können die mit Partikeln beladenen Abscheidekörper wieder entfernt werden. Dadurch, dass das Förderband luftdurchlässig ist, kann die Luft nahezu ungehindert durch die Zwischenräume zwischen den Abscheidekörpern und dem Förderband strömen.

Alternativ kann die Transporteinrichtung ein Fördermittel, insbesondere ein umlaufendes grobmaschiges Endlos-Förderband oder an umlaufenden Endlos-Ketten geführte Stäbe, aufweisen, welches geeignet ist, eine luftdurchlässige Trägerbahn aus dem selben Material wie die Abscheidekörper in den Bereich des Luftstroms hinein und aus dem Bereich des Luftstroms heraus zu fördern, wobei die Trägerbahn ihrerseits geeignet ist, die Abscheidekörper lose als Schüttgut zu tragen. Dies hat den Vorteil, dass die Abscheidekörper auch außerhalb des Förderbereichs des Fördermittels einfach getragen werden. Sie können dann gemeinsam mit der Trägerbahn wiederaufbereitet und zu frischen Abscheidekörpern verarbeitet werden.

Bei einer anderen vorteilhaften Ausführungsform kann eine Kompaktiereinrichtung, insbesondere ein Walzwerk, vorgesehen sein zur Überführung der mit Partikeln beladenen Abscheidekörper gegebenenfalls gemeinsam mit einer Trägerbahn in einen kompakten Zustand, insbesondere in eine aufrollbare Bahn oder eine Plattenform. Die Abscheidekörper können so einfach und schnell bereits vor Ort in eine kompakte Form gebracht und platzsparend transportiert und gelagert werden.

Zweckmäßigerweise können die Zufuhreinrichtung für die Abscheidekörper in Förderrichtung vor der Transporteinrichtung und die Kompaktiereinrichtung hinter der Transporteinrichtung angeordnet und Übergabemittel vorgesehen sein, derart, dass die Abscheidekörper automatisch von der Zufuhreinrichtung über die Transporteinrichtung zur Kompaktiereinrichtung gelangen. Auf diese Weise können die Abscheidekörper automatisch im Durchlauf aus kompakten Grundkörpern gewonnen, zur Abtrennung der Partikel in den Bereich des Luftstroms hinein und aus dem Bereich des Luftstroms heraus befördert werden. Die mit Partikel beladenen Abscheidekörper können einfach gegebenenfalls gemeinsam mit der Trägerbahn in einen kompakten Zustand überführt werden.

Zweckmäßigerweise kann eine Steuereinheit zur Steuerung der Zufuhreinrichtung und/oder der Transporteinrichtung und/oder der Kompaktiereinrichtung vorgesehen sein. Mit der Steuereinheit kann die Förder- oder Taktgeschwindigkeit abhängig vom Abscheidegrad und/oder von einem Differenzdruck in Strömungsrichtung der Luft vor der Abtrenneinheit und dahinter verändert werden, um immer eine optimale Abtrennung der Partikel von der Luft zu erzielen. Zur Erfassung des Abscheidegrads und des Differenzdrucks können geeignete Sensoren vorgesehen sein, die funktional mit der Steuereinheit verbunden sind.

Darüber hinaus kann eine Regeneriereinrichtung zum Regenerieren der Abscheidekörper vorgesehen sein. Der Regeneriereinrichtung können die Abscheidekörper zugeführt werden, sobald ein bestimmter Schwellwert für die Aufnahmekapazität und/oder eine Druckänderung vor und/oder nach der Abtrenneinheit erreicht ist. Mit der Regeneriereinrichtung können die Abscheidekörper insbesondere auf mechanischem, chemischem und/oder thermischem Wege regeneriert werden, ohne dass die Vorrichtung selbst stillgelegt werden muss.

Ausführungsbeispiele der Erfindung werden nachfolgend anhand der Zeichnung näher erläutert; es zeigen
- Figur 1: schematisch einen vertikalen Längsschnitt eines ersten Ausführungsbeispiels einer Lackiervor- richtung mit einer Spritzkabine für Fahrzeugka- rosserien und mit einer Einrichtung zum trocke- nen Abscheiden von Lack-Overspray;
- Figur 2: schematisch einen vertikalen Längsschnitt eines zweites Ausführungsbeispiels einer Lackiervor- richtung, welche zu der Lackiervorrichtung aus der Figur 1 ähnlich ist.

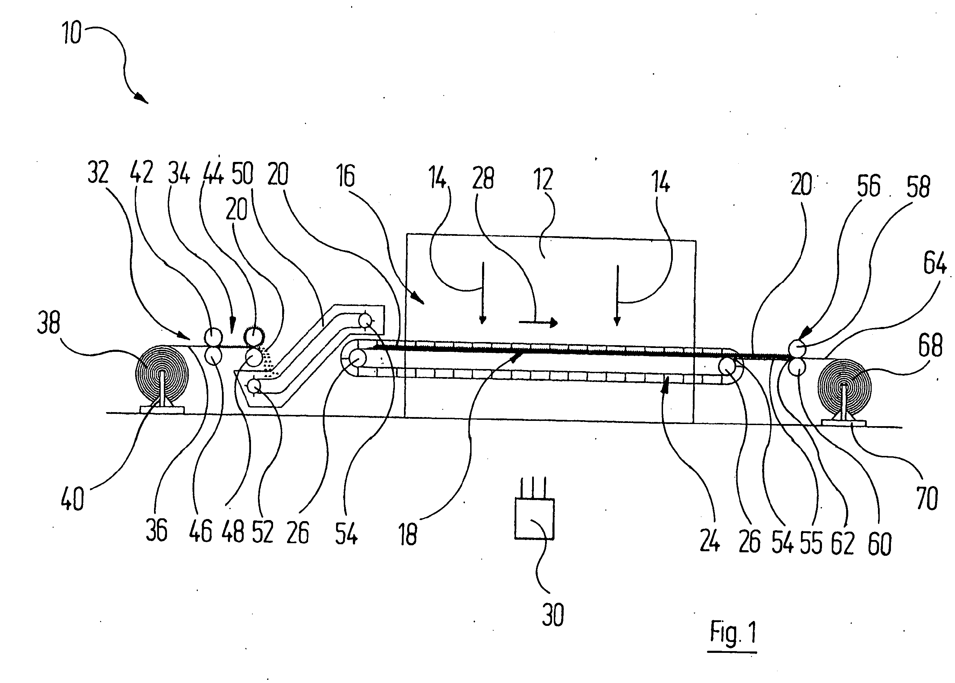

In Figur 1 ist eine insgesamt mit dem Bezugszeichen 10 versehene Lackiervorrichtung mit einer Spritzkabine 12 in einem vertikalen Längsschnitt dargestellt.

Mit einer nicht dargestellten Fördereinrichtung kann jeweils eine Fahrzeugkarosserie aus einem vorgeschalteten, nicht gezeigten Vorbehandlungsbereich in hier nicht weiter interessierender Weise in die Spritzkabine 12 hinein, durch diese hindurch und wieder aus dieser heraus transportiert werden.

In der Spritzkabine 12 wird die Fahrzeugkarosserie über bekannte, ebenfalls nicht gezeigte Sprüheinrichtungen mit Lackpartikeln besprüht. Hierbei entstehender Lack-Overspray wird mit einem Luftstrom entfernt, der von oben nach unten, in Figur 1 angedeutet durch Pfeile 14, durch die Spritzkabine 12 strömt und die überschüssigen Lackpartikel mitnimmt. Der Luftstrom 14 wird in bekannter Weise realisiert, indem die Luft aus der Spritzkabine 12 mit einer nicht gezeigten bekannten Saugeinrichtung über Absaugkanäle im Bodenbereich der Spritzkabine 12 abgesaugt, einem im folgenden näher erläuterten Reinigungsprozess unterworfen und anschließend der Spritzkabine 12 von oben wieder zugeführt wird.

Um die feuchten und/oder klebrigen und daher haftfähigen Lackpartikel aus dem Luftstrom 14 abzuscheiden und wieder den Sprüheinrichtungen zu zuführen, ist eine Abscheideeinrichtung 16 zum trockenen Abscheiden des Lack-Oversprays vorgesehen.

Die Abscheideeinrichtung 16 verfügt über eine Abtrenneinheit 18 mit einer losen Schüttung von mehreren Lagen aus einer sehr großen Zahl profilierter Abscheidekörper 20 aus Aluminium. Unter Profilieren wird im Folgenden die dreidimensionale Verformung eines vorzugsweise ebenen Körpers verstanden. In Figur 1 sind der Übersichtlichkeit halber lediglich einige der angedeuteten Abscheidekörpern 20 mit Bezugszeichen versehen. In der Realität sind die Abscheidekörper 20 nicht so gleichmäßig angeordnet, wie dies der Einfachheit halber in Figur 1 gezeigt ist. Auch die Formen der Abscheidekörpern 20 müssen nicht so gleichmäßig sein.

Die Zwischenräume zwischen den Abscheidekörpern 20 dienen als Durchtrittskanäle für den Luftstrom 14.

Die Durchtrittskanäle weisen insbesondere wegen der Form und der Anordnung der Abscheidekörper 20 sehr viele Umlenkungen auf, durch die der Luftstrom 14 geleitet wird, wobei die Lackpartikel auf Grund ihrer Trägheit mit großer Wahrscheinlichkeit auf die Oberflächen der Abscheidekörper 20 treffen und dort haften bleiben.

Die Abscheidekörper 20 sind unterhalb der zu befördernden Fahrzeugkarosserie auf dem horizontal verlaufenden oberen Trum eines umlaufenden endlosen Förderbandes 24 aufgeschüttet. Das Förderband 24 ist aus luftdurchlässigem Material, welches für die Abscheidekörper 20 hingegen dicht ist. Das Förderband 24 kann beispielsweise aus grobmaschigem Gewebe sein.

Das Förderband 24 ist über zwei Umlenkrollen 26 umgelenkt, die sich vor Lack geschützt außerhalb der Spritzkabine 12 auf gegenüberliegenden Seiten der Spritzkabine 12 befinden.

Eine der Umlenkrollen 26 ist in bekannter Weise über einen nicht gezeigten Förderband-Motor angetrieben, derart, dass sie die Abscheidekörper 20 kontinuierlich in Förderrichtung 28, also senkrecht zum Luftstrom 14, von links nach rechts verschieben können.

Der Förderband-Motor ist über Steuerleitungen steuerbar mit einer Steuereinheit 30 verbunden.

In Förderrichtung 28 vor dem Förderband 24 befindet sich außerhalb der Spritzkabine 12 eine Zufuhreinrichtung 32 für die Abscheidekörper 20.

Die Zufuhreinrichtung 32 umfasst ein schnelldrehendes Rotations-Stanzwerkzeug 34, dem eine Aluminiumbahn 36 von einer Zufuhr-Rolle 38 zugeführt wird. Die Aluminiumbahn 36 hat vorzugsweise eine Dicke von 0,1 mm. Sie kann jedoch auch eine andere Dicke aufweisen. Sie ist glatt, kann aber auch perforiert oder strukturiert sein. Die Zufuhr-Rolle 38 ist auf einem vorzugsweise fahrbaren Gestell 40 gelagert.

Das Rotations-Stanzwerkzeug 34 verfügt über zwei in Förderrichtung 28 hintereinander angeordnete Walzenpaare mit jeweils einer Stanzwalze 42 und 44 oben und einer Gegenwalze 46 und 48 unten.

Wenigstens eines der beiden Walzenpaare 42, 46 oder 44, 48 ist über einen nicht gezeigten Stanzmotor angetrieben, der über Steuerleitungen steuerbar mit der Steuereinheit 30 verbunden ist.

Die Aluminiumbahn 36 läuft durch die Spalte zwischen den Stanzwalzen 42, 44 und den Gegenwalzen 46, 48. Die in Förderrichtung 28 vordere Stanzwalze 42, in Figur 1 links, ist so ausgestaltet, dass sie in Zusammenwirkung mit der entsprechenden Gegenwalze 46 beim Durchlaufen der Aluminiumbahn 36 reliefartige Strukturen in diese stanzt. Die hintere Stanzwalze 44 zerstückelt anschließend in Zusammenwirkung mit ihrer Gegenwalze 48 die strukturierte Aluminiumbahn 36 in ein Vielzahl von profilierten Abscheidekörpern 20, die aus dem Spalt dieses in Förderrichtung 28 zweiten Walzenpaars 44, 48 herausfallen.

Unterhalb des zweiten Walzenpaares 44, 48 befindet sich der Anfang eines oberen Trums eines umlaufenden endlosen Zufuhrförderbandes 50 der Zufuhreinrichtung 32. Das obere Trum erstreckt sich in Förderrichtung 28 von dem Rotations-Stanzwerkzeug 34 weg in Richtung zum Förderband 24. Auf dem oberen Trum des Zufuhrförderbandes 50 treffen die von dem Rotations-Stanzwerkzeug 34 herabfallenden Abscheidekörper 20 auf.

Das Zufuhrförderband 50 ist am Anfang seines oberen Trums und dessen Ende jeweils über eine Umlenkrolle 52 und 54 umgelenkt.

Das obere Trum des Zufuhrförderbandes 50 steigt in Förderrichtung 28 an. Die Umlenkrolle 54 an seinem Ende befindet sich oberhalb des Anfangs des oberen Trums des Förderbandes 24, so dass die am Ende des oberen Trums des Zufuhrförderbandes 50 herabfallenden Abscheidekörper 20 direkt auf dem oberen Trum des Förderbandes 24 landen.

Eine der Umlenkrollen 52 oder 54 des Zufuhrförderbandes 50 ist mit einem nicht gezeigten Zufuhrband-Motor angetrieben, so dass das obere Trum des Zufuhrförderbandes 50 in Förderrichtung 28 läuft.

Der Zufuhrband-Motor ist über Steuerleitungen steuerbar mit der Steuereinheit 30 verbunden.

Das Zufuhrförderband 50 ermöglicht, dass die obere Umfangsseite einer vollen Zufuhr-Rolle 38, die Spalte der Walzenpaare 42, 46 und 44, 48 des Rotations-Stanzwerkzeugs 34 und das obere Trum des Förderbandes 24 etwa auf einer Höhe angeordnet sein können. Auf diese Weise muss die Zufuhr-Rolle 38, welche auch sehr schwer sein kann, nicht angehoben werden. Sie kann direkt von dem Gestell 40 abgerollt werden. Außerdem kann so die Aluminiumbahn 36 in angenehmer Höhe bequem in das Rotations-Stanzwerkzeug 34 eingefädelt werden. Mit dem Zufuhrförderband 50 wird dann wieder Höhe gewonnen, damit das Förderband 24 nicht zu tief sitzt.

Am Ende des oberen Trums des Förderbandes 24, in der Figur 1 rechts, schließt sich außerhalb der Spritzkabine 12 eine horizontale Rampe 55 an. Die obere Fläche am Anfang der Rampe 55 befindet sich etwa auf Höhe der oberen Fläche des oberen Trums des Förderbandes 24.

Ein Randbereich am Anfang der Rampe 55, der der Umlenkrolle 26 am Ende des oberen Trums des Förderbandes 24 benachbart ist, ist nach unten entlang einer Biegekante 54 gebogen und folgt ein Stück weit dem Verlauf des Förderbandes 24 entlang dem Umfang der Umlenkrolle 26. Die Biegekante 54 wirkt so als Schaber, mit dem die mit Lackpartikeln beladenen Abscheidekörper 20 am Ende des oberen Trums des Förderbandes 24 von diesem geschabt werden. Die abgeschabten Abscheidekörper 20 werden von den auf dem Förderband 24 nachfolgenden Abscheidekörpern 20 auf die Rampe 55 und auf dieser weiter in Förderrichtung 28 zu einem Walzwerk 56 geschoben.

Das Walzwerk 56 weist zwei umlaufende Walzen 58 und 60 auf, deren Achsen horizontal senkrecht zur Förderrichtung 28 verlaufen und lotrecht untereinander angeordnet sind. Ein horizontaler Spalt zwischen den Walzen 58 und 60 befindet sich etwa auf gleicher Höhe mit der oberen Fläche der Rampe 55 an deren dem Walzwerk 56 zugewandten Ende.

Ein Randbereich am Ende der Rampe 55 ist nach unten gebogen und folgt ein Stück weit dem Umfang der unteren Walze 60. Die dortige Biegekante 62 reicht bis in den Spalt, so dass die Abscheidekörper 20 dort von den nachfolgenden Abscheidekörpern 20 bis in den Spalt gedrückt und zwischen den Walzen 58 und 60 zu einer kompakten Bahn 64 aus mit Lackpartikeln beladenem Aluminium gewalzt werden.

Die gewalzte Aluminium-Lack-Bahn 64 wird in Förderrichtung 28 hinter dem Walzwerk 56 abgezogen und auf eine Abfuhr-Rolle 68 aufgerollt. Die Abfuhr-Rolle 68 befindet sich auf einem vorzugsweise fahrbaren Gestell 70 und ist mit einem nicht gezeigten Trommelmotor angetrieben.

Der Trommelmotor ist über Steuerleitungen steuerbar mit der Steuereinheit 30 verbunden.

Mit einer nicht gezeigten Regeneriereinrichtung kann das mit Lackpulver beladene Aluminium vor Ort oder anderenorts von der Abfuhr-Rolle 68 abgerollt und regeneriert werden, das heißt die Lackpartikel können von dem Aluminium getrennt werden. Die Regeneration geschieht auf mechanischem, chemischen und/oder thermischem Wege. Wiederverwendbare Lackpartikel beispielsweise von sehr klebrigem UV-Lack können dabei mittels Quetsch- oder Presseinrichtungen aus dem Aluminium-Lack-Gemisch ausgetrieben und anschließend zu Wiederverwendung aufgearbeitet werden. Das regenerierte Aluminium kann dann erneut zu Aluminiumbahnen 36 gewalzt und auf Zufuhr-Rollen 38 aufgerollt werden. Die Zufuhr-Rollen 38 stehen dann zur Zerkleinerung mit dem Rotations-Stanzwerkzeug 34 bereit.

Die Abscheideeinrichtung 16 funktioniert wie folgt:
Zu Beginn des Lackierpozesses wird eine der Zufuhr-Rolle 38 mit einer Bahn 36 aus regeneriertem oder neuem Aluminium in den Spalt des ersten Walzenpaares 42, 46 des Rotations-Stanzwerkzeugs 34 eingefädelt.

Dann wird mit der Steuereinheit 30 der Stanzmotor gestartet und die Aluminiumbahn 36 durch die Spalte zwischen den Walzenpaaren 42, 46 und 44, 48 gezogen, geformt, zerstückelt und am Ende in Form von profilierten Abscheidekörpern 20 auf das Zufuhrförderband 50 geworfen.

Der Zufuhrband-Motor wird gleichzeitig oder kurz nach dem Stanzmotor mit der Steuereinheit 30 gestartet.

Mit dem Zufuhrförderband 50 werden die Abscheidekörper 20 in Förderrichtung 28 weiterbefördert und am Ende des oberen Trums des Zufuhrförderbandes 50 auf das obere Trum des Förderbandes 24 abgeworfen. Die Profilierung des Abscheidekörper 20 verhindert dabei, dass diese platt aufeinander liegen und ermöglicht so die Durchtrittskanäle für den Luftstrom 14.

Der Förderband-Motor wird gleichzeitig oder kurz nach dem Zufuhrband-Motor mit der Steuereinheit 30 gestartet.

Mit der Steuereinheit 30 werden die Geschwindigkeiten des Stanzmotors, des Zufuhrförderband-Motors und des Förderband-Motors so aneinander angepasst, dass auf dem oberen Trum des Förderbandes 24 eine Schüttung von Abscheidekörpern 20 mit einer gleichmäßigen Lagendicke und Dichte entsteht, um eine optimale Lackabscheidung zu ermöglichen.

Mit dem Förderband 24 werden die Abscheidekörper 20 in Förderrichtung 28 langsam in den Bereich der Spritzkabine 12, der später von dem Luftstrom 14 durchströmt wird, und durch diesen hindurch befördert.

Sobald das obere Trum des Förderbandes 24 wenigstens im Bereich des späteren Luftstroms 14 geschlossen mit einer Schüttung von Abscheidekörpern 20 bedeckt ist und so eine in sich zusammenhängende Abtrenneinheit 18 gebildet ist, wird die Lackierung der Fahrzeugkarosserie gestartet.

Die Lackierung findet in bekannter Weise in der Spritzkabine 12 statt. Dabei wird die Luft von oben in die Spritzkabine 12 eingeblasen und aus der Spritzkabine 12 mit der Saugeinrichtung über die Absaugkanäle am Boden der Spritzkabine 12 abgesaugt. Der Luftstrom 14 nimmt den Lack-Overspray mit und durchströmt mit diesem die Abtrenneinheit 18 von oben nach unten. Beim Durchströmen der Abtrenneinheit 18 wird der Luftstrom 14 in den Durchtrittskanälen mehrfach umgelenkt, wobei die Lackpartikel an den Abscheidekörpern 20 haften bleiben. Die gereinigte Luft wird der Spritzkabine 12 in bekannter Weise von oben wieder zugeführt.

Die Abscheidekörper 20 werden mit dem Förderband 24 kontinuierlich in Förderrichtung 28 zur Rampe 55 befördert, über diese automatisch dem Walzwerk 56 zugeführt und zu der Aluminium-Lack-Bahn 64 gepresst. Mit der Steuereinheit 30 wird der Trommelmotor gestartet und die Aluminium-Lack-Bahn 64 auf die Abfuhr-Rolle 68 aufgerollt.

Gleichzeitig wird kontinuierlich die Aluminiumbahn 36 von der Zufuhr-Rolle 38 mit dem Rotations-Stanzwerkzeug 34 zu Abscheidekörpern 20 zerkleinert, die über das Zufuhrförderband 50 auf das obere Trum des Förderbandes 24 geschüttet und mit diesem in Förderrichtung 28 mitgenommen werden. Der Luftstrom 14 muss durch diese Anordnung immer die Abtrenneinheit 18 mit einer losen Schüttung aus Abscheidekörpern 20 durchströmen.

Der Beladungsgrad der Abtrenneinheit 18 mit Lackpartikeln wird in bekannter Weise überwacht. Hierzu können beispielsweise die Druckverhältnisse in Luftströmungsrichtung 14 vor und/oder hinter der Abtrenneinheit 18 erfasst werden.

Die Geschwindigkeiten des Förderbandes 24, des Zufuhrförderbandes 50 und des Rotations-Stanzwerkzeugs 34 werden mit der Steuereinheit 30 so angepasst, dass bei kleinstmöglichem Bedarf an Abscheidekörpern 20 immer eine optimale Abscheidung von Lackpartikeln erfolgt.

Sobald der Beladungsgrad der Abtrenneinheit 18 einen bestimmten Schwellwert überschreitet, wird mit der Steuereinheit 30 automatisch die Geschwindigkeit des Förderband-Motors und damit des Förderbandes 24 vergrößert, so dass die Abscheidekörper 20 eine kürzere Verweilzeit im Luftstrom 14 haben. Automatisch werden mit der Steuereinheit die Geschwindigkeiten des Zufuhrförderbandes 50 und des Rotations-Stanzwerkzeugs 34 angepaßt, so dass eine gleichmäßige Schüttung erreicht wird.

Alternativ oder zusätzlich zur Beschleunigung des Förderbandes 24 kann auch die Höhe der Schüttung in Richtung des Luftstroms 14 und damit die Aufnahmekapazität der Abtrenneinheit 18 für Lackpartikel vergrößert werden. Hierzu werden automatisch mit der Steuereinheit 30 der Stanzmotor des Rotations-Stanzwerkzeugs 34 und der Zufuhrmotor des Zufuhrförderbandes 50 relativ zum Förderband-Motor beschleunigt.

Sobald das Ende der frischen Aluminiumbahn 36 auf der Zufuhr-Rolle 38 erreicht ist, wird dies mit einem nicht gezeigten Sensor erfasst und an die Steuereinheit 30 übermittelt.

Mit der Steuereinheit 30 werden daraufhin automatisch der Stanzmotor, der Zufuhrmotor, der Förderband-Motor und der Trommelmotor gestoppt, um zu verhindern, dass eine Lücke oder Inhomogenität in der Schüttung entsteht und/oder die Aluminium-Lack-Bahn 64 vor der Abfuhr-Rolle 68 abreißt.

Alternativ kann die Erfassung des Endes der Zufuhr-Rolle 38 so frühzeitig erfolgen, dass der Wechsel der Zufuhr-Rolle 38 ohne Stopp der Motoren durchgeführt werden kann, indem eine neue Aluminiumbahn an die auslaufende Aluminiumbahn 36 angehängt wird.

Sobald die Abfuhr-Rolle 68 voll ist, wird sie gegen eine leere Rolle ausgetauscht.

Die volle Abfuhr-Rolle 68 wird dann zur Regeneriereinrichtung gebracht.

In der Regeneriereinrichtung wird das mit Lackpartikeln beladene Aluminium regeneriert, während in der Spritzkabine 12 der Lackiervorgang unter Verwendung der Aluminiumbahn 36 von der Zufuhr-Rolle 38 fortgesetzt wird.

Das regenerierte Aluminium wird gewalzt und zu Zufuhr-Rollen 38 aufgerollt, welche dann zu Wiederverwendung bereit stehen.

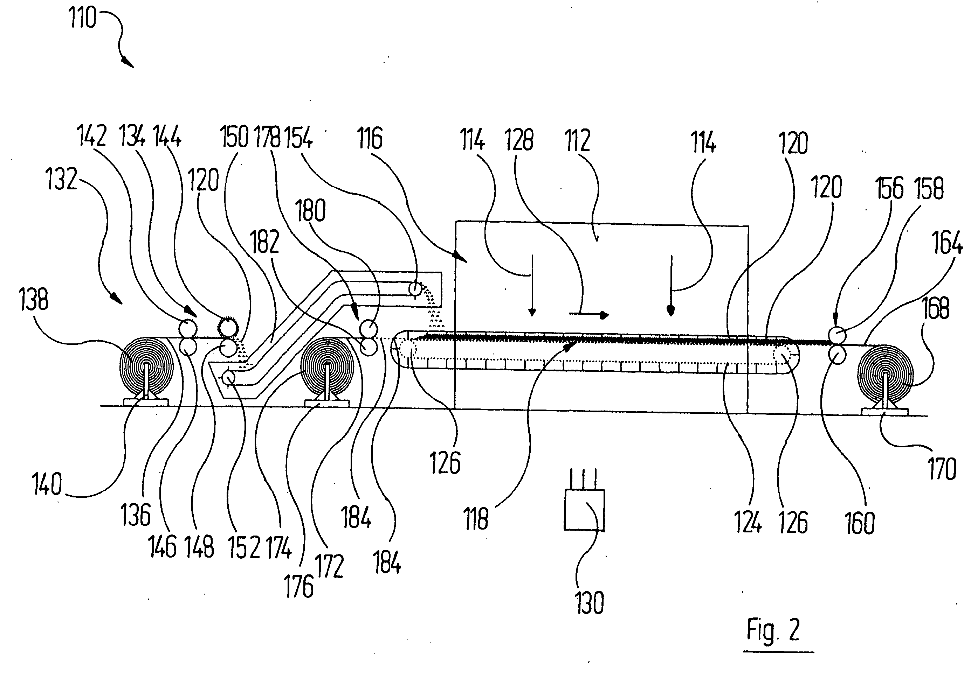

In der Figur 2 ist ein zweiten Ausführungsbeispiels einer Lackiervorrichtung 110 mit einer Spritzkabine 112 in einem vertikalen Schnitt gezeigt. Diejenigen Elemente, die zu denen des ersten, in Figur 1 dargestellten Ausführungsbeispiels ähnlich sind, sind mit den selben Bezugszeichen zuzüglich 100 versehen. Bei dem zweiten Ausführungsbeispiel ist anstelle des Förderbandes 24 ein Kettenförderer 124 mit zwei parallelen Endlos-Ketten vorgesehen, welche entsprechend dem Förderband 24 im ersten Ausführungsbeispiel über zwei Umlenkrollen 126 umgelenkt sind. Zwischen den Endlos-Ketten erstreckt sich senkrecht zur Förderrichtung 28 beabstandet zueinander eine Vielzahl von horizontalen Stäben. Die Stäbe sind in Figur 2 von der Endlos-Kette im Vordergrund verdeckt.

Auf den das obere Trum realisierenden oberen Stäben liegt eine Trägerbahn 172 aus demselben Material wie die Abscheidekörper 120, hier also aus Aluminium, auf. Die Trägerbahn 172 wird von einer zweiten Zufuhr-Rolle 174 abgerollt und in Förderrichtung 128 mit dem Kettenförderer 124 gefördert. Die Abscheidekörper 120 sind analog zum ersten Ausführungsbeispiel aufgeschüttet, aber im zweiten Ausführungsbeispiel auf die Trägerbahn 172 statt direkt auf das Förderband 24 wie beim ersten Ausführungsbeispiel.

Als Trägerbahn 172 kann dieselbe Art von Aluminiumbahn 136 verwendet werden, wie sie zur Herstellung der Abscheidekörper 120 benutzt wird, so dass nicht zweierlei Bahnen bereitgestellt werden müssen. Zweckmäßigerweise sind dann auch die erste Zufuhr-Rolle 138 und die zweite Zufuhr-Rolle 174 gleich ausgebildet.

Die Trägerbahn 172 läuft gemeinsam mit den aufgeschütteten Abscheidekörpern 120 kontinuierlich in die Spritzkabine 112, durch diese hindurch, aus ihr heraus und in das Walzwerk 156. Mit dem Walzwerk 156 wird die Trägerbahn 172 mit den mit Lackpartikeln beladenen Abscheidekörpern 120 zu einer Aluminium-Lack-Bahn 164 verpresst und anschließend auf die Abfuhr-Rolle 168 aufgerollt.

Auf eine Rampe 55 wie beim ersten Ausführungsbeispiel kann hier verzichtet werden, da die Trägerbahn 172 selbsttragend die Lücke zwischen dem Kettenförderer 124 und dem Walzwerk 156 überbrückt.

Außerdem müssen beim zweiten Ausführungsbeispiel die Abscheidekörper 120 nicht am Ende des oberen Trums des Kettenförderers 124 abgeschabt werden, da sie gemeinsam mit der Trägerbahn 172 abgezogen werden.

Die Ausdehnung des Zufuhrförderband 150 ist in Förderrichtung 128 größer als die des Zufuhrförderbandes 50 aus dem ersten Ausführungsbeispiel, so dass sich der Anfang des oberen Trums des Zufuhrförderbandes 150, das Rotations-Stanzwerkzeug 134 und die erste Zufuhr-Rolle 138 in einem größeren Abstand von dem Kettenförderer 124 befinden als im ersten Ausführungsbeispiel vom Förderband 24.

Unterhalb des Zufuhrförderbandes 150 ist daher Raum für die zweite Zufuhr-Rolle 174, die sich auf einem vorzugsweise fahrbaren Gestell 176 befindet.

Zwischen der zweiten Zufuhr-Rolle 138 und dem Anfang des oberen Trums des Kettenförderers 124 ist außerdem ein Stanzwerk 178 angeordnet. Die Trägerbahn 172 ist durch einen Spalt zwischen einer Stanzwalze 180, in Figur 2 oben, und einer Gegenwalze 182, in Figur 2 unten, des Stanzwerks 178 geführt. Der Spalt befindet sich auf einer Höhe mit dem oberen Trum des Kettenförderers 124.

Das Stanzwerk 178 kann über einen eigenen Motor angetrieben sein, der steuerbar mit der Steuereinheit 30 verbunden ist. Es kann aber auch ohne eigenen Antrieb frei mit der Trägerbahn 172 mitlaufen.

Mit dem Stanzwerk 178 wird eine Vielzahl von durchgängigen Löchern 184 flächig verteilt in die durchlaufende Trägerbahn 172 gestanzt. Die Löcher 184 sind so bemessen, dass der Luftstrom 14 möglichst ungehindert passieren kann, aber die Abscheidekörper 120 nicht durch sie hindurch fallen.

Das Ende des oberen Trums des Zufuhrförderbandes 150 befindet sich außerhalb der Spritzkabine 112 in Förderrichtung 128 hinter dem Stanzwerk 178 und oberhalb des Kettenförderers 124.

Anstelle des Kettenförderers 124 kann beim zweiten Ausführungsbeispiel ein Förderband, beispielsweise ein grobmaschiges Förderband, verwendet werden, welches Luftlöcher aufweist, die deutlich größer sind als die des Förderbandes 24 aus dem ersten Ausführungsbeispiel.

Bei allen oben beschriebenen Ausführungsbeispielen einer Spritzkabine 12; 112 für Fahrzeugkarosserien sind unter anderem folgende Modifikationen möglich:

Die Erfindung ist nicht beschränkt auf die Verwendung bei Lackiervorrichtungen 10; 110 mit Spritzkabinen 12; 112. Vielmehr kann sie auch bei andersartigen Vorrichtung zum Behandeln von Gegenständen eingesetzt werden, die eine Einrichtung zum trockenen Abscheiden von haftfähigen Partikeln benötigen. Es können auch Partikel abgeschieden werden, die aus anderen Gründen als aufgrund ihrer Feuchtigkeit oder Klebrigkeit haftfähig sind.

Die Abscheidekörper 20; 120 können statt aus Aluminium auch aus einem anderen, vorzugsweise einfach form- und walzbaren Material, beispielsweise aus Kupfer oder Kunststoff, sein.

Das Aluminium kann statt in Bahnen 36; 136 auf Zufuhr-Rollen 38; 138 auch in Plattenform bereitgestellt und einer geeigneten Zerkleinerungseinrichtung zugeführt werden.

Um einen anderen Abscheidegrad zu erreichen, kann die Form und/oder Größe der Abscheidekörper 20; 120 beispielsweise durch Änderung der Zerkleinerungseinrichtung, insbesondere der Stanzwalzen 42, 44; 142, 144, unterschiedlich vorgegeben werden.

Beispielsweise können in einem ersten Schritt die Kanten der Abscheidekörper 20; 120 geschnitten werden, wobei in den Eckbereichen Reststege stehen bleiben. In einem zweiten Schritt wird eine Verformung der Abscheidekörper 20; 120 eingeleitet, bei der die Reststege ausgerissen werden.

Statt des Rotations-Stanzwerkzeugs 34; 134 kann auch eine andersartige Zerkleinerungseinrichtung verwendet werden.

Auf das Zufuhrförderband 50; 150 kann auch verzichtet werden, wenn der zweite Spalt des Rotations-Stanzwerkzeugs 34 über dem Förderband 24 beziehungsweise dem Kettenförderer 124 angeordnet ist.

Beim ersten Ausführungsbeispiel können die Abscheidekörper 20 als Schüttgut statt direkt auf dem Förderband 24 auch lose in luftdurchlässigen Behältern auf dem Förderband 24 befördert werden.

Das Förderband 24 beziehungsweise der Kettenförderer 124 kann statt kontinuierlich auch intermittierend oder getaktet betrieben werden.

Es kann auch vorgesehen sein, das obere Trum Förderbandes 24 beziehungsweise des Kettenförderers 124 um die Ausdehnung des Luftstroms 14; 114 in Förderrichtung 28; 128 schrittweise vorwärts zu bewegen, sobald der Beladungsgrad der Abtrenneinheit 18; 118 einen bestimmten Schwellwert überschreitet. Auf diese Weise werden alle im Luftstrom 14; 114 befindlichen, mit Lackpartikeln optimal beladenen Abscheidekörper 20; 120 gemeinsam gegen frische Abscheidekörper 20; 120 ausgetauscht.

Das obere Trum des Förderbandes 24 beziehungsweise des Kettenförderers 124 kann im Bereich des Luftstroms 14; 114 in Transportrichtung der Fahrzeugkarosserie, aber auch senkrecht dazu verlaufen. Der Förderweg der Abscheidekörper 20; 120 kann so optimal an die Länge und/oder Form der Spritzkabine 12; 112 angepasst werden. Die Abscheidekörper 20; 120 können auch entgegen der Transportrichtung der Fahrzeugkarosserien befördert werden.

Ergänzend kann in Luftströmungsrichtung hinter der Abtrenneinheit 18; 118 wenigstens ein Feinfilter oder eine Feinfilterbatterie zur weiteren Reduktion der Lackpartikel nachgeschaltet sein.

Auch können auf dem Förderband 24 oder gegebenenfalls auf den Böden der Behältnisse beziehungsweise auf den Stäben des Kettenförderers 124 Filtervliese oder Filtermatten angeordnet sein, um zusätzlich Lackpartikel zu binden.

Um auch bereits angetrockneten und weniger klebrigen Lack-Overspray optimal abzutrennen, kann Wassernebel in Luftströmungsrichtung 14; 114 vor der Abtrenneinheit 18; 118 in die Spritzkabine 12; 112 eingebracht werden.

Alternativ oder zusätzlich können die Abscheidekörper 20; 120 mit einer dauerklebrigen Substanz behandelt, beispielsweise eingesprüht, werden. Die Aluminiumbahn 36; 136 kann auch mit klebriger Folie kaschiert sein.

Die mit Lackpartikeln beladenen Abscheidekörper 20; 120 können statt zu einer Bahn 36; 136 auch in einer anderen Form, beispielsweise in Platten- oder Quaderform, kompaktiert werden.

Anstelle des Walzwerks 56; 156 kann auch eine andere Kompaktiereinrichtung, beispielsweise eine hydraulische Presse, vorgesehen sein.

Die Kompaktiereinrichtung kann auch getrennt von dem Förderband 24 beziehungsweise dem Kettenförderer 124 angeordnet sein. Es können beispielsweise auch weitere Förderbänder vorgesehen sein, welche vom Ende des oberen Trums des Förderbandes 24 beziehungsweise des Kettenförderers 124 zur Kompaktiereinrichtung führen.

Die Gestelle 40 und 70 beziehungsweise 140, 170 und 176 können gleich sein, so dass nicht unterschiedliche Gestelle erforderlich sind.

Die Regeneriereinrichtung kann sich auch direkt an das Förderband 24 beziehungsweise an den Kettenförderer 124 anschließen.

## Patentansprüche

1. Vorrichtung zum Beschichten von Gegenständen mit einer Einrichtung (16; 116) zum trockenen Abscheiden von haftfähigen Partikeln aus einem Luftstrom (14; 114), welche über wenigstens eine Abtrenneinheit (18; 118) mit Durchtrittsöffnungen für den Luftstrom (14; 114) verfügt, wobei die Abtrenneinheit (18; 118) wenigstens eine Lage aus Abscheidekörpern (20; 120) aufweist, an denen die Partikel haften und zwischen denen die Durchtrittsöffnungen verlaufen, und eine Zufuhreinrichtung (32; 132) für die Abscheidekörper (20; 120) vorgesehen ist, die geeignet ist, die Abscheidekörper (20; 120) der Abtrenneinheit (18; 118) zuzuführen,
**dadurch gekennzeichnet, dass**
a) die Zufuhreinrichtung (32; 132) eine Zerkleinerungseinrichtung (34; 134) zur Abtrennung der Abscheidekörper (20; 120) von einer aufgerollten Bahn (36; 136) oder einem plattenförmigen Grundkörper umfasst, und
b) die Abscheidekörper (20;120) profiliert sind.

2. Vorrichtung nach Anspruch 1 zum Lackieren von Gegenständen.

3. Vorrichtung nach Anspruch 1 oder 2 zum Beschichten von Fahrzeugkarosserien.

4. Vorrichtung nach einem der vorherigen Ansprüche, **dadurch gekennzeichnet, dass** die Einrichtung (16; 116) zum Abscheiden von Lack-Overspray geeignet ist.

5. Vorrichtung nach einem der vorherigen Ansprüche, **dadurch gekennzeichnet, dass** die Zerkleinerungseinrichtung ein Rotations-Stanzwerkzeug (34; 134) aufweist.

6. Vorrichtung nach einem der vorherigen Ansprüche, **dadurch gekennzeichnet, dass** die Abscheidekörper (20; 120) aus Metall sind.

7. Vorrichtung nach Anspruch 6, **dadurch gekennzeichnet, dass** die Abscheidekörper (20; 120) aus Aluminium sind.

8. Vorrichtung nach einem der vorherigen Ansprüche, **gekennzeichnet durch** eine Transporteinrichtung, die geeignet ist, die Abscheidekörper (20; 120) in den Bereich des Luftstroms (14; 114) hinein und aus dem Bereich des Luftstroms (14; 114) heraus zu fördern.

9. Vorrichtung nach Anspruch 8, **dadurch gekennzeichnet, dass** die Transporteinrichtung ein Endlos-Fördermittel (24; 124) ist.

10. Vorrichtung nach Anspruch 8 oder 9, **dadurch gekennzeichnet, dass** die Transporteinrichtung (24; 124) geeignet ist, die Abscheidekörper (20; 120) im Wesentlichen senkrecht zum Luftstrom (14; 114) intermittierend oder kontinuierlich zu fördern.

11. Vorrichtung nach einem der Ansprüche 8 bis 10, **dadurch gekennzeichnet, dass** die Transporteinrichtung ein umlaufendes luftdurchlässiges Endlos-Förderband (24) aufweist, das geeignet ist, die Abscheidekörper (20) lose als Schüttgut oder in luftdurchlässigen Behältern zu befördern.

12. Vorrichtung nach einem der Ansprüche 8 bis 11, **dadurch gekennzeichnet, dass** die Transporteinrichtung ein Fördermittel (124) aufweist, welches geeignet ist, eine luftdurchlässiges Trägerbahn (172) aus dem selben Material wie die Abscheidekörper (120) in den Bereich des Luftstroms (114) hinein und aus dem Bereich des Luftstroms (114) heraus zu fördern, wobei die Trägerbahn (172) ihrerseits geeignet ist, die Abscheidekörper (120) lose als Schüttgut zu tragen.

13. Vorrichtung nach Anspruch 12, **dadurch gekennzeichnet, dass** die Transporteinrichtung ein umlaufendes grobmaschiges Endlos-Förderband oder an umlaufenden Endlos-Ketten (124) geführte Stäbe aufweist.

14. Vorrichtung nach einem der vorherigen Ansprüche, **gekennzeichnet durch** eine Kompaktiereinrichtung (56; 156) zur Überführung der mit Partikeln beladenen Abscheidekörper (20; 120) gegebenenfalls gemeinsam mit einer Trägerbahn (172) in einen kompakten Zustand.

15. Vorrichtung nach Anspruch 14, **dadurch gekennzeichnet, dass** die Kompaktiereinrichtung ein Walzwerk (56; 156) ist.

16. Vorrichtung nach Anspruch 14 oder 15, **dadurch gekennzeichnet, dass** die Kompaktiereinrichtung (56; 156) geeignet ist zur Überführung der mit Partikeln beladenen Abscheidekörper (20; 120) gegebenenfalls gemeinsam mit der Trägerbahn (172) in eine aufrollbare Bahnform (164) oder eine Plattenform.

17. Vorrichtung nach einem der vorhergehenden Ansprüche, **dadurch gekennzeichnet, dass** die Zufuhreinrichtung (32; 132) für die Abscheidekörper (20; 120) in Förderrichtung (28; 128) vor der Transporteinrichtung (24; 124) und die Kompaktiereinrichtung (56; 156) hinter der Transporteinrichtung (24; 124) angeordnet ist und Übergabemittel (50, 55; 150) vorgesehen sind, derart, dass die Abscheidekörper (20; 120) automatisch von der Zufuhreinrichtung (32; 132) über die Transporteinrichtung (24; 124) zur Kompaktiereinrichtung (56; 156) gelangen.

18. Vorrichtung nach einem der vorhergehenden Ansprüche, **gekennzeichnet durch** eine Steuereinheit (130) zur Steuerung der Zufuhreinrichtung (32; 132) und/oder der Transporteinrichtung (24; 124) und/oder der Kompaktiereinrichtung (56; 156).

19. Vorrichtung nach einem der vorherigen Ansprüche, **gekennzeichnet durch** eine Regeneriereinrichtung zum Regenerieren der Abscheidekörper (20; 120).

## Claims

1. An apparatus for coating objects, having a device (16; 116) for dry separation of adhesive particles from an air stream (14; 114), which has at least one separating unit (18; 118) with passage openings for the air stream (14; 114), the separating unit (18; 118) comprising at least one layer of collecting bodies (20; 120), to which the particles adhere and between which the passage openings extend, and a feed device (32; 132) being provided for the collecting bodies (20; 120), which is suitable for feeding the collecting bodies (20; 120) to the separating unit (18; 118),
**characterised in that**
a) the feed device (32; 132) comprises a comminution device (34; 134) for separating the collecting bodies (20; 120) from a rolled-up web (36; 136) or a sheet-form base member, and
b) the collecting bodies (20;120) are profiled.

2. An apparatus according to claim 1 for painting objects.

3. An apparatus according to claim 1 or claim 2 for coating vehicle bodies.

4. An apparatus according to any one of the preceding claims, **characterised in that** the device (16; 116) is suitable for the separation of coating material overspray.

5. An apparatus according to any one of the preceding claims, **characterised in that** the comminution device comprises a rotary punching tool (34; 134).

6. An apparatus according to any one of the preceding claims, **characterised in that** the collecting bodies (20; 120) are made of metal.

7. An apparatus according to claim 6, **characterised in that** the collecting bodies (20; 120) are made of aluminium.

8. An apparatus according to any one of the preceding claims, **characterised by** a transport device, which is suitable for conveying the collecting bodies (20; 120) into the region of the air stream (14; 114) and out of the region of the air stream (14; 114).

9. An apparatus according to claim 8, **characterised in that** the transport device is an endless conveying means (24; 124).

10. An apparatus according to claim 8 or claim 9, **characterised in that** the transport device (24; 124) is suitable for conveying the collecting bodies (20; 120) intermittently or continuously substantially perpendicularly to the air stream (14; 114).

11. An apparatus according to any one of claims 8 to 10, **characterised in that** the transport device comprises a revolving air-permeable endless conveyor belt (24), which is suitable for conveying the collecting bodies (20) loosely as bulk material or in air-permeable containers.

12. An apparatus according to any one of claims 8 to 11, **characterised in that** the transport device comprises a conveying means (124), which is suitable for conveying an air-permeable supporting web (172) of the same material as the collecting bodies (120) into the region of the air stream (114) and out of the region of the air stream (114), wherein the supporting web (172) is in turn suitable for carrying the collecting bodies (120) loosely as bulk material.

13. An apparatus according to claim 12, **characterised in that** the transport device comprises a revolving wide-mesh endless conveyor belt or bars conveyed on revolving endless chains (124).

14. An apparatus according to any one of the preceding claims, **characterised by** a compacting device (56; 156) for converting the collecting bodies (20; 120) loaded with particles, optionally together with a supporting web (172), into a compact state.

15. An apparatus according to claim 14, **characterised in that** the compacting device is a rolling mill (56; 156).

16. An apparatus according to claim 14 or claim 15, **characterised in that** the compacting device (56; 156) is suitable for converting the collecting bodies (20; 120) loaded with particles, optionally together with the supporting web (172), into a web form (164) capable of being rolled up or a sheet form.

17. An apparatus according to any one of the preceding claims, **characterised in that** the feed device (32; 132) for the collecting bodies (20; 120) is arranged upstream of the transport device (24; 124) in the conveying direction (28; 128) and the compacting device (56; 156) is arranged downstream of the transport device (24; 124) and transfer means (50, 55; 150) are provided, such that the collecting bodies (20; 120) arrive automatically from the feed device (32; 132) via the transport device (24; 124) at the compacting device (56; 156).

18. An apparatus according to any one of the preceding claims, **characterised by** a control unit (130) for controlling the feed device (32; 132) and/or the transport device (24; 124) and/or the compacting device (56; 156).

19. An apparatus according to any one of the preceding claims, **characterised by** a regenerating device for regenerating the collecting bodies (20; 120).

## Revendications

1. Dispositif de revêtement d'objets, comportant un système (16 ; 116) conçu pour dissocier, à sec, des particules adhérentes d'avec un courant d'air (14 ; 114) et équipé d'au moins une unité séparatrice (18 ; 118) munie d'orifices de passage dudit courant d'air (14 ; 114), sachant que ladite unité séparatrice (18 ; 118) est pourvue d'au moins une couche de corps de séparation (20 ; 120) auxquels les particules adhèrent et entre lesquels les orifices de passage sont disposés, et sachant qu'il est prévu un système (32 ; 132) d'amenée des corps de séparation (20 ; 120), apte à délivrer lesdits corps de séparation (20 ; 120) à ladite unité séparatrice (18 ; 118),
**caractérisé par le fait que**
a) le système d'amenée (32 ; 132) englobe un système de fragmentation (34 ; 134) en vue de la dissociation des corps de séparation (20 ; 120) d'avec une nappe enroulée (36 ; 136) ou d'avec un corps de base en forme de plaque, et
b) lesdits corps de séparation (20 ; 120) sont profilés.

2. Dispositif selon la revendication 1, affecté au laquage d'objets.

3. Dispositif selon la revendication 1 ou 2, affecté au revêtement de carrosseries de véhicules.

4. Dispositif selon l'une des revendications précédentes, **caractérisé par le fait que** le système (16 ; 116) se prête à la dissociation de couches de laque pulvérisées en surface.

5. Dispositif selon l'une des revendications précédentes, **caractérisé par le fait que** le système de fragmentation présente un outil rotatif de matriçage (34 ; 134).

6. Dispositif selon l'une des revendications précédentes, **caractérisé par le fait que** les corps de séparation (20 ; 120) consistent en un métal.

7. Dispositif selon la revendication 6, **caractérisé par le fait que** les corps de séparation (20 ; 120) consistent en de l'aluminium.

8. Dispositif selon l'une des revendications précédentes, **caractérisé par** un système de transport apte à convoyer les corps de séparation (20 ; 120) jusque dans la région du courant d'air (14 ; 114) et hors de la région dudit courant d'air (14 ; 114).

9. Dispositif selon la revendication 8, **caractérisé par le fait que** le système de transport est un moyen convoyeur (24 ; 124) sans fin.

10. Dispositif selon la revendication 8 ou 9, **caractérisé par le fait que** le système de transport (24 ; 124) se prête au convoyage des corps de séparation (20 ; 120) par intermittence ou en continu, pour l'essentiel perpendiculairement au courant d'air (14 ; 114).

11. Dispositif selon l'une des revendications 8 à 10, **caractérisé par le fait que** le système de transport offre une bande convoyeuse (24) sans fin, perméable à l'air et effectuant une révolution, apte à convoyer les corps de séparation (20) de façon lâche, sous forme de matière en vrac, ou dans des conteneurs perméables à l'air.

12. Dispositif selon l'une des revendications 8 à 11, **caractérisé par le fait que** le système de transport offre un moyen convoyeur (124) apte à convoyer une nappe de substrat (172) perméable à l'air, constituée du même matériau que les corps de séparation (120), jusque dans la région du courant d'air (114) et hors de la région dudit courant d'air (114), ladite bande de substrat (172) étant, quant à elle, apte à porter lesdits corps de séparation (120) de façon lâche, sous forme de matière en vrac.

13. Dispositif selon la revendication 12, **caractérisé par le fait que** le système de transport comporte une bande convoyeuse sans fin à maillage grossier, effectuant une révolution, ou des tiges guidées sur des chaînes (124) sans fin, en révolution.

14. Dispositif selon l'une des revendications précédentes, **caractérisé par** un système de compactage (56 ; 156) conçu pour faire passer, à un état compact, les corps de séparation (20 ; 120) chargés en particules, éventuellement en association avec une nappe de substrat (172).

15. Dispositif selon la revendication 14, **caractérisé par le fait que** le système de compactage est un train de laminage (56 ; 156).

16. Dispositif selon la revendication 14 ou 15, **caractérisé par le fait que** le système de compactage (56 ; 156) est approprié pour faire passer les corps de séparation (20 ; 120) chargés en particules, éventuellement en association avec la nappe de substrat (172), à la forme d'une nappe enroulable (164) ou à la forme d'une plaque.

17. Dispositif selon l'une des revendications précédentes, **caractérisé par le fait que**, dans la direction du convoyage (28 ; 128), le système (32 ; 132) d'amenée des corps de séparation (20 ; 120) se trouve devant le système de transport (24 ; 124), et le système de compactage (56 ; 156) se trouve derrière ledit système de transport (24 ; 124) ; et des moyens de transfert (50, 55 ; 150) sont prévus de façon telle que lesdits corps de séparation (20 ; 120) parviennent automatiquement dudit système d'amenée (32 ; 132) audit système de compactage (56 ; 156), par l'intermédiaire dudit système de transport (24 ; 124).

18. Dispositif selon l'une des revendications précédentes, **caractérisé par** une unité de commande (130) affectée au pilotage du système d'amenée (32 ; 132) et/ou du système de transport (24 ; 124) et/ou du système de compactage (56 ; 156).

19. Dispositif selon l'une des revendications précédentes, **caractérisé par** un système régénérateur assigné au recyclage des corps de séparation (20 ; 120).
